# EUROPEAN PATENT APPLICATION

(11) **EP 4 624 022 A1**
(43) Date of publication of application: **01.10.2025**
(21) Application number: 24166797.1
(22) Date of filing: 27.03.2024
(51) Int. Cl.: B01D 46/00, B01D 46/10, B01D 46/121, B01D 46/52

(54) **FILTER ELEMENT AND FILTER DEVICE AT WHICH A LIQUID IS SEPARATED**

(71) Applicant: AAF LTD., Cramlington, Northumberland NE23 8AF (GB)
(72) Inventor: HERRMANN, Torsten, 81679 München (DE)
(74) Representative: Haseltine Lake Kempner LLP

(57) **Abstract**

The present invention relates to a filter element having a frame for fixing a filter medium for cleaning a fluid stream guided through the filter medium, in which a liquid is separated from the fluid stream. At least one drain channel is provided in the frame for draining off the liquid from the filter element.

## Description

### Field of the invention

The present invention relates to a filter element comprising a frame for fixing a filter medium for cleaning a fluid stream guided through the filter medium, whereby a liquid is separated from the fluid stream. The present invention relates further to a filter device comprising a variety of the filter elements and a central main structure to which each filter element is at least partially assigned.

### Background of the invention

Filter elements clean fluids flowing through these filter elements from dust, salt and other particles. A frame of each filter element provides a stable structure for the filter element, gives it its basic form and holds a filter medium in its intended position. The filter element can be shaped, for example, as a cuboid or as a quadrilateral prism. The filter medium, which may be felt or fabric, for example, is inserted into the frame of the filter element.

A filter device as defined herein contains a variety of these filter elements. The central main structure of the filter device may be composed by components of the filter elements only, or may also contain its own structural components, such as cross members.

An important possible use of such filter elements and filter devices is the cleaning of gaseous fluids such as air or steam. In heavy fog, for example, the atmospheric air contains large amounts of water. Thus, the filter device receives a fluid, which contains liquid particles. This causes a filter medium in the filter device to be wetted and the whole or parts of the filter medium possibly to become saturated with the liquid. Lack of draining possibilities, possibly insufficient draining or uncontrolled leakage, may lead to damage by damp or rot in the filter device or otherwise in the surroundings.

It is accordingly an object of the present invention to provide a filter device which is capable of efficiently draining off liquid.

### Summary

The objection underlying the invention is fulfilled by a filter device and a filter element which is used in the filter device, whereby the filter element is also usable without the filter device.

The filter element of the invention comprises a frame for fixing a filter medium for cleaning a fluid stream guided through the filter medium, whereby a liquid is separated from the fluid stream, whereby at least one drain channel is provided in the frame for draining off the liquid from the filter element.

First of all the frame provides the stable structure of the filter element, gives it its basic form and holds the filter medium in its intended position. The filter element is preferably shaped as a cuboid or as a quadrilateral prism. The filter medium, which is preferably felt or fabric, is inserted into the frame of the filter element.

Meanwhile, the at least one drain channel provided in the frame, which is usually located on a lower frame part, ensures that liquid collected in the filter element drains off. More precisely, the drain channel ensures a simple but secure controlled outflow of liquid that collects during the filtering process in the filter element. This prevents moisture damage in and around the filter element.

In addition, the period of use of the filter element is extended without the filter element must be manually drained or replaced in short maintenance intervals.

According to a further aspect of the invention the filter medium is a folded filter medium. Folded filter medium usually has a higher stability, in particular if the filter medium is folded into a plurality of triangles. Furthermore, by folding the filter medium, the surface of the filter element is increased and thus a higher filter performance can be achieved. In addition, the folds facilitate the downward flow of liquid produced during the filtering process.

Preferably, the at least one drain channel is a drain groove or contains one or more drain grooves. A drain groove is an elongated recess, which accelerates the drainage of the liquid from a surface and thus increase the efficiency of the drainage process in the filter element. In a further preferred embodiment the drain channel is formed as a drain tube within at least one of the spars of the frames.

In an improved embodiment of the invention the frame includes a side part or side spar enabled to be connected with one or more other filter elements or to any components of a filter device. By means of such side parts filter elements are preferably mounted on sealing surfaces. As a result, larger and more powerful filter devices and filter systems can be constructed in a straightforward manner.

The filter device of the invention comprises a variety of filter elements and a central main structure to which each filter element is at least partially assigned, wherein at least one drain tube is provided in the central main structure for draining off the liquid from the filter elements.

Such a filter device is used in many ways, preferably in air inlet systems for gas turbines. In this case, the filter device may contain any types of filter elements, such as high-efficiency particulate air filters (HEPA filters). The filter elements of the filter device contain preferably folded filter mediums and drain channels with drain grooves. The central main structure may be composed only of components of the filter elements, e.g. frame spars, or may also contain its own structural components, e.g. support and transverse struts. The at least one drain tube drains the liquid that has collected in the filter elements. Such drain tubes allow a controlled drainage of the liquid out of the filter elements, and consequently avoid moisture damage in the filter device and on the items around the filter device. For these drainages no extra costs arise.

Advantageously, the at least one drain tube is directed vertically for guiding the liquid to the bottom part of the filter device. The vertical direction of the drain tubes allows the central drain of superimposed filter elements. As a result, the liquid can be transported very quickly and in a short time in the lower part of the filter device.

According to another aspect of the invention the central main structure is formed by interconnected side parts of the frames. Forming the central main structure only by the side parts of the frames allows a flexible size of the filter device. Furthermore, a simple construction is provided in which no further essential tools, such as cross beams, mounting brackets or the like, are required. This saves material and therefore costs.

Preferably, the drain tubes of the central main structure are formed by the interconnected side parts. Forming the drain tubes only by the side parts of the frames avoids the need for other components. Thus, a structure for draining liquid is realised in a very simple manner.

In an improved embodiment of the invention the side parts of the filter elements include outlets for draining off the liquid through these outlets into at least one drain tube of the central main structure. The outlets are adapted outflow openings for the liquid in the filter elements. Thus, a controlled interaction of draining liquid from the filter elements into one or more drain tubes is ensured.

The above described aspects are claimed as well in corresponding methods. In one aspect of the invention the method for cleaning a fluid stream comprises guiding the fluid stream through a filter element, separating a liquid from the fluid stream using a filter medium fixed by a frame of the filter element, and draining off the liquid from the filter element, wherein the liquid is drained of through at least one drain channel provided in the frame of the filter element. The guidance of the fluid stream is an essential part of a filtering process. The separation of the liquid results from the moisture content of the fluid. The drainage of the liquid, as one of the main tasks of the invention, occurs via at least one drain channel in the frame of the filter element without any further effort in a very simple and effective manner.

It should be obvious that the filter element in this method may also contain other features or items, such as, but not limited to folded filter mediums, drain grooves and connection parts for connecting with other filter elements.

In further aspects, the method may relate to the filter device. Such a method may include one or more of the following steps:
- draining off the liquid from the filter elements,
- guiding the liquid into at least one drain tube,
- passing the liquid through one or more drain tubes to the bottom and/or to an outlet of the filter device, and
- draining the liquid out of the filter device.

Of course, the filter device of the method may also contain further features or items, such as, but not limited to a main frame enclosing both the central main structure and all filter elements of the filter device, one or more cross members as part of the central main structure, one or more additional frame drain channels at least at one side of the main frame, and one or more auxiliary drain channels to drain liquid along the one or more cross members to at least one additional frame drain channel.

### Brief description of the drawings

In the schematic drawings,
Fig. 1 is a front view of an exemplary embodiment of a filter device with an enlarged view of some contained filter elements,
Fig. 2 is a cross-sectional top view of an exemplary embodiment of a filter element,
Fig. 3 is a cross-sectional side view of the filter element in Fig. 2,
Fig. 4 is a cross-sectional top view of an exemplary embodiment of a filter device with an enlarged view of three filter elements,
Fig. 5 is a cross-sectional side view of the filter device in Fig. 4 with an enlarged view of two filter elements,
Fig. 6 is a cross-sectional top view of an exemplary embodiment of three filter elements with an enlarged view of one of these filter elements and
Fig. 7 is a front view of an exemplary embodiment of a filter device.

### Detailed description of the invention

Before the present filter device and filter element are described in detail, it is to be understood that this invention is not limited to the elements, devices and methods described, as these may vary. It is also to be understood that the terminology used in the description is for the purpose of describing the particular versions or embodiments only, and is not intended to limit the scope of the present invention which will be limited only by the appended claims.

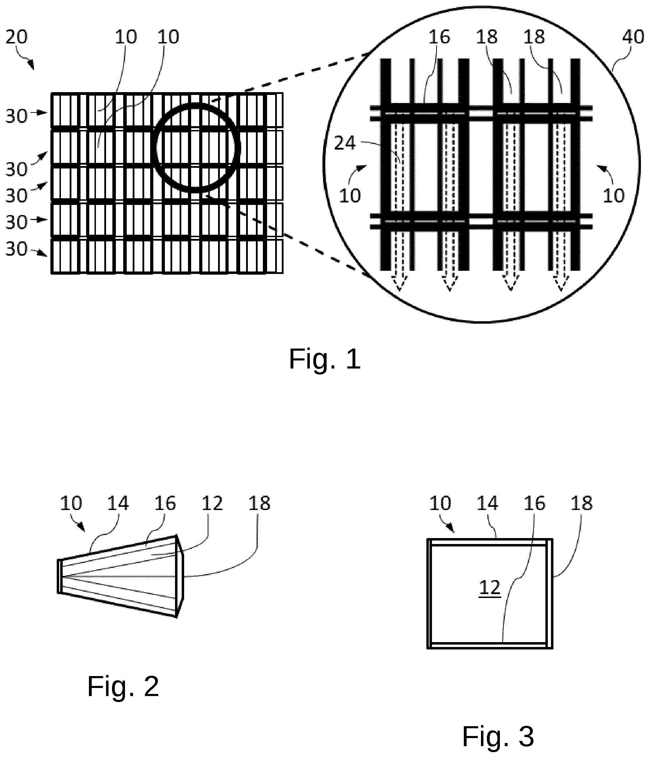

Fig. 1 depicts a front view of a filter device 20 with an enlarged view 40 of some contained filter elements 10. The filter device 20 is shown on the left side of Fig. 1, from which the circled part has been selected for the enlarged view 40 on the right side of Fig.1. The filter device 20 includes several stacked rows 30 of filter elements 10. The enlarged view 40 on the right side of Fig. 1 shows some filter elements 10 of the filter device 20, whereby only two of these filter elements 10 are completely visible.

The filter device 20 is intended for cleaning of gaseous fluids such as air or steam, and to drain off separated liquid such as water. Several filter elements 10 are arranged in the filter device 20 in each of the stacked rows 30. In the example of Fig. 1, the filter device 20 includes five rows 30, each with six filter elements 10 on the front and another six filter elements 10 on the back side of a main filter plain. The trapezoidal shaped filter elements 10 are arranged upright with the smallest side surface protruding outwards from the main filter plain. The filter elements 10 of the front and the rear, hereinafter referred to as front and rear filter elements, are alternately connected to each other via side parts 18 of the filter elements 10 in such a way that each one front filter element is connected to two rear filter elements and vice versa. In Fig. 1 the rear filter elements are only partially visible, because they are partially hidden by the front filter elements.

As indicated in the enlarged view 40 of Fig. 1, each filter element 10 contains a drain channel 16 through which liquid is drained off, more specifically through which liquid is guided into the direction of the respective side part 18. Due to the connection of the side parts 18, drain tubes 24 are formed for draining of liquid downwards. The drain tubes 24 of each pair of stacked rows 30 fit together and form extended drain tubes 24. Thereafter, the liquid is passed through one or more of the drain tubes 24 to the bottom and/or to an outlet of the filter device 20 and then drained from the filter device 20.

Fig. 2 and Fig. 3 depict a cross-sectional view of a filter element 10. In the cross-sectional top view of the filter element 10 in Fig. 2 several drain channels 16 are visible on the inside of the trapezoid bottom of the frame 14 of the filter element 10. The filter element 10 includes such a drain channel 16, which allows liquid to flow in the direction of a side part 18 of the frame 14. This side part 18 may be configured to connect the filter element 10 to other filter elements 10 or any other objects. The cross-sectional side view of the filter element 10 in Fig. 3 shows the surrounding structure of the frame 14. The frame 14 fixes a filter medium 12. The filter medium 12 is attached to the two open sides of the frame 14, which thus form two equal-sized side surfaces of the trapezoidal filter element 10.

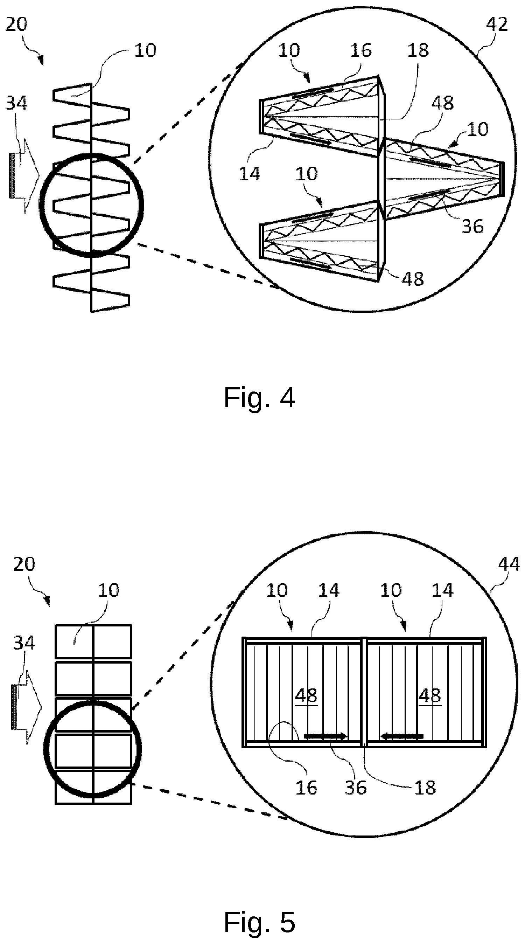

Fig. 4 and Fig. 5 depict a cross-sectional view of a filter device 20 with an enlarged view 42, 44 of some contained filter elements 10. In the top view of the filter device 20 in Fig. 4, the trapezoidal units represent contained filter elements 10, from which the circled part has been selected for an enlarged view 42 on the right side of Fig. 4. The enlarged view 42 on the right side of Fig. 4 shows three of these filter elements 10. In the side view of the filter device 20 in Fig. 5, the rectangular units represent contained filter elements 10, from which the circled part has been selected for an enlarged view 44 on the right side of Fig. 5. The enlarged view 44 on the right side of Fig. 5 shows two of these filter elements 10.

The cross-sectional top view of the filter element 20 in Fig. 4 illustrates the structure of the filter device 20, formed from alternately front side and rear side arranged filter elements 10. The arrow 34 on the right shows the direction of the inflowing fluid. The enlarged view 42 of three of the filter elements 10 shows the connection of the individual filter elements 10 on the side parts 18 to a structure of the filter device 20. The filter elements 10 have frames 14 and folded filter media 48. The arrows 36 in the enlarged view 42 indicate the direction of flow of the liquid towards the side parts 18 via the drain channels 16 in the bottom part of the frame 14.

In the cross-sectional side view of the filter device 20 in Fig. 5 stacked filter elements 10 are visible. On each level filter elements 10 are arranged, which protrude forwards and backwards. In this side view only two filter elements 10 are visible on each level, since the other filter elements 10 are hidden. The arrow 34 on the right shows the direction of the inflowing fluid. The enlarged view 44 of one level of the filter elements 10 shows the structure of the filter elements 10 with frames 14 and folded filter media 48. The single filter elements 10 are connected by their side parts 18. The arrows 36 at the bottom of the filter elements 10 indicate the direction of flow of the liquid towards the side parts 18 via the drain channels 16.

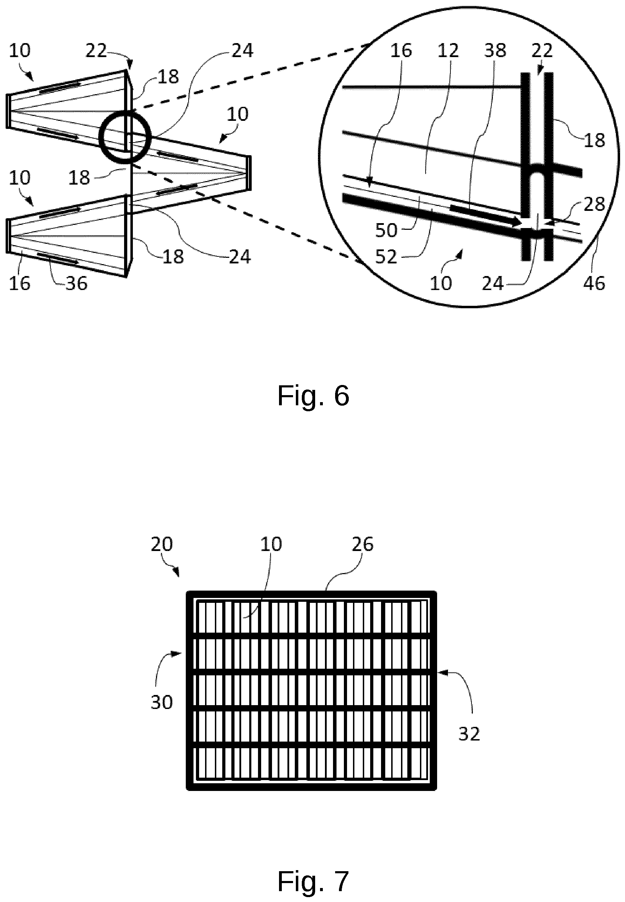

Fig. 6 depicts a cross-sectional top view of three filter elements 10 with an enlarged partial view 46 of one of these filter elements 10. The three filter elements 10 are shown on the left side of Fig. 6, from which the circled part has been selected for an enlarged partial view 46 on the right side of Fig.6. The three filter elements 10 may correspond to the three filter elements 10 shown in the enlarged view 42 on the right side of Fig. 4, whereas Fig. 6 additionally shows drain tubes 24 as part of the central main structure 22. The enlarged view 46 on the right side of Fig. 6 shows a subsection of one of the filter elements 10 in which the drain channel 16 with a first drain groove 50 and a second drain groove 52, the side part 18 of the filter element 10, an outlet 28 in this side part 18, and the drain tube 24 as part of the central main structure 22 is visible.

In this embodiment the interconnected side parts 18 of the filter elements 10 form a central main structure 22. In this central main structure 22 a drain tube 24 for draining off the liquid from the filter elements 10. The enlarged view 46 of a part of one filter element 10 shows the side part 18 having an opening or outlet 28 for draining off liquid from a drain channel 16 through this outlet 28 into the drain tube 24 of the central main structure 22. The arrow 38 in the enlarged view 46 indicates the flow of liquid from the drain channel 16 of the filter element 10 into the drain tube 24 of the central main structure 22. The flow of liquid in the drain channel 16 is accelerated by the drain grooves 50, 52.

Fig. 7 depicts a front view of a filter device 20. In the filter device 20 a number of filter elements 10 are arranged in stacked rows 30. In this embodiment the filter device 20 includes a main frame 26 enclosing all contained filter elements 10 of the filter device 20. Further the filter device 20 includes one or more cross members 32. Such a cross member 32 can be configured to fasten and hold filter elements 10. In such a case, the central main structure 22, as shown in Fig. 6, is also be formed by one or more cross members 32. The one or more cross members 32 may be connected to the main frame 26. Thus, the filter device 20 may include auxiliary drain channels (not shown) in the cross members 32 to drain liquid to an additional frame drain channel (not shown) at one side of the main frame 26 of the filter device 20. This additional frame drain channel drains the liquid downwards. Finally, the liquid is drained through an outlet out of the filter device 20.

The previous detailed description has been provided for the purposes of illustration and description. Thus, although there have been described particular embodiments of the present invention of a new and useful filter element 10 and filter device 20, it is not intended that such references be constructed as limitations up-on the scope of this invention except as set forth in the following claims.

### List of reference signs

- 10: filter element
- 12: filter medium
- 14: frame
- 16: drain channel
- 18: side part
- 20: filter device
- 22: central main structure
- 24: drain tube
- 26: main frame
- 28: outlet
- 30: row of filter elements
- 32: cross members
- 34: arrow
- 36: arrow
- 38: arrow
- 40: enlarged view
- 42: enlarged view
- 44: enlarged view
- 46: enlarged view
- 48: folded filter medium
- 50: first drain groove
- 52: second drain groove

## Claims

1. A filter element (10) comprising a frame (14) for fixing a filter medium (12) for cleaning a fluid stream guided through the filter medium (12), whereby a liquid is separated from the fluid stream,
wherein at least one drain channel (16) is provided in the frame (14) for draining off the liquid from the filter element (10).

2. The filter element (10) according to claim 1,
wherein the filter medium (12) is a folded filter medium (48).

3. The filter element (10) according to any of the preceding claims,
wherein the at least one drain channel (16) is a drain groove (50) or contains one or more drain grooves (50, 52).

4. The filter element (10) according to any of the preceding claims,
wherein the frame (14) includes a side part (18) enabled to be connected with one or more other filter elements (10) or to any components of a filter device (20).

5. A filter device (20) comprising a variety of filter elements (10) according to any of the preceding claims, and a central main structure (22) to which each filter element (10) is at least partially assigned,
wherein at least one drain tube (24) is provided in the central main structure (22) for draining off the liquid from the filter elements (10).

6. The filter device (20) according to claim 5,
wherein the at least one drain tube (24) is directed vertically for guiding the liquid to the bottom part of the filter device (20).

7. The filter device (20) according to claim 5 or 6,
wherein the central main structure (22) is formed by interconnected side parts (18) of the frames (14) of the filter elements (10).

8. The filter device (20) according to claim 7,
wherein the at least one drain tube (24) of the central main structure (22) is formed by the interconnected side parts (18) of the frames (14) of the filter elements (10).

9. The filter device (20) according to one of claims 5 to 8,
wherein the side parts (18) of the frames (14) of the filter elements (10) include outlets (28) for draining off the liquid through these outlets (28) into at least one drain tube (24) of the central main structure (22).

10. A method for cleaning a fluid stream, the method comprising:
- guiding the fluid stream through a filter element (10),
- separating a liquid from the fluid stream using a filter medium (12) fixed by a frame (14) of the filter element (10), and
- draining off the liquid from the filter element (10) through at least one drain channel (16) in the frame (14) of the filter element (10).
